# FASCICULE DE BREVET EUROPEEN

(11) **EP 2 516 537 B1**
(45) Date de publication et mention de la délivrance du brevet: **12.02.2020**
(21) Numéro de dépôt: 10796010.6
(22) Date de dépôt: 15.12.2010
(51) Int. Cl.: C08L 7/00, C08L 21/00, C08L 53/02, B60C 1/00

(54) **PNEUMATIQUE DONT LA ZONE SOMMET EST POURVUE D'UNE SOUS-COUCHE COMPORTANT UN ELASTOMERE THERMOPLASTIQUE**
LAGE MIT EINEM THERMOPLASTISCHEN ELASTOMER FÜR DIE GÜRTELZONE EINES LUFTREIFENS
TYRE WITH A CROWN COMPRISING A LAYER COMPRIISNG A THERMOPLASTIC ELASTOMER

(30) Priorité: 23.12.2009 FR 0959467
(43) Date de publication de la demande: 31.10.2012
(73) Titulaire: Compagnie Générale des Etablissements Michelin, 63000 Clermont-Ferrand (FR)
(72) Inventeur: LOPEZ, Béatrice, F-63720 Chavaroux (FR); VASSEUR, Didier, F-63100 Clermont-Ferrand (FR)
(74) Mandataire: Desbordes, Guillaume
(86) Numéro de dépôt international: PCT/EP2010/069783
(87) Numéro de publication internationale: WO 2011/076635

(56) Documents cités:
- WO-A1-2008/121139
- US-A1- 2002 037 962
- US-A1- 2005 288 441
- US-A1- 2006 189 755

## Description

La présente invention est relative aux couches d'élastomères utilisées dans le sommet (« *crown* ») des pneumatiques et aux compositions de caoutchoucs à base d'élastomères diéniques et d'élastomères thermoplastiques styréniques (TPS), utilisées pour la fabrication de tels pneumatiques.

Un pneumatique doit obéir de manière connue à un grand nombre d'exigences techniques, souvent antinomiques, parmi lesquelles une résistance élevée à l'usure, une faible résistance au roulement, ainsi qu'un bon comportement routier (« *handling* ») sur véhicule automobile.

Ce compromis de propriétés, en particulier du point de vue de la résistance au roulement et du comportement routier, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" (*Highly Dispersible Silica*), capables de rivaliser, du point de vue du pouvoir renforçant, avec les noirs de carbone conventionnels de grade pneumatique.

Pour améliorer le comportement routier, on le sait, une rigidité supérieure de la bande de roulement est souhaitable. L'augmentation de la rigidité du sommet peut être obtenue par exemple en augmentant le taux de charge renforçante ou en incorporant certaines résines renforçantes dans les compositions de caoutchouc constitutives de ce sommet (voir par exemple WO 02/10269), ou en disposant une sous-couche d'élastomère entre le ceinture et la partie externe de la bande de roulement du pneumatique, présentant une rigidité supérieure à celle de ladite partie externe.

Toutefois, de manière connue, une telle augmentation de la rigidité du sommet peut pénaliser les propriétés d'hystérèse et donc la résistance au roulement des pneumatiques.

La demande de brevet US 2005/28841 A1 décrit une composition de caoutchouc comprenant de plus de 60 à 95 parties en poids d'un caoutchouc sélectionné dans le groupe constitué par NR, IR, SBR, BR, EPM, EPDM, caoutchouc siliconé et/ou caoutchouc fluoré, et de 5 à moins de 40 pce d'un copolymère polaire spécifique. Cette composition peut être utilisée en sous-couche de bande de roulement.

La demande de brevet US 2002/0037962 A1 décrit un pneumatique ayant une composition de caoutchouc comprenant une composition élastomère réticulée au **soufre à base de 50 à 99 pce d'un premier élastomère contenant des insaturations oléfiniques et 1 à 50 pce d'un second élastomère différent du premier et qui est un copolymère blocs élastomérique spécifique à base de butadiène et de styrène. Cette composition peut être utilisée dans la base de la bande de roulement.**

**La demande de brevet** US 2006/189755 A1 **décrit une composition élastomérique thermoplastique incluant un élastomère thermoplastique (A) ayant des groupes fonctionnels le long de la chaîne, un copolymère éthylène-propylène (B) à bloc propylène et à bloc éthylène-propylène. Cette composition peut être utilisée en sous-couche de bande de roulement.**

Poursuivant leurs recherches, les Demanderesses ont découvert une sous-couche pour pneumatique qui comporte une composition de caoutchouc comprenant au moins un élastomère diénique et un copolymère thermoplastique spécifique qui permet d'améliorer la rigidité du sommet des pneumatiques et donc le comportement routier des pneumatiques, tout conservant un bon niveau d'hystérèse et donc de résistance au roulement, voire en diminuant l'hystérèse par rapport à des compositions conventionnelles.

Ainsi, un premier objet de l'invention concerne un pneumatique radial pour véhicule automobile comportant:
- un sommet surmonté d'une bande de roulement pourvue d'au moins une couche élastomère radialement externe destinée à entrer au contact de la route lors du roulage du pneumatique ;
- deux bourrelets inextensibles, deux flancs reliant les bourrelets à la bande de roulement, une armature de carcasse passant dans les deux flancs et ancrée dans les bourrelets ;
- le sommet étant renforcé par une armature de sommet ou ceinture disposée circonférentiellement entre l'armature de carcasse et la bande de roulement ;
- une couche élastomère radialement interne dite « sous-couche » de formulation différente de la formulation de la couche élastomère radialement externe, cette sous-couche étant disposée entre la couche radialement externe et la ceinture,
caractérisé en ce que la dite sous-couche élastomère comprend une composition de caoutchouc comportant au moins un élastomère diénique dont un polybutadiène (BR) à un taux compris entre 10 et 60 pce, une charge renforçante et un copolymère thermoplastique styrénique (dit « élastomère TPS »).

Les pneumatiques de l'invention sont particulièrement destinés à équiper des véhicules à moteur de type tourisme, incluant les véhicules 4x4 (à quatre roues motrices) et véhicules SUV (*"Sport Utility Vehicles"*), des véhicules deux roues (notamment motos) comme des véhicules industriels choisis en particulier parmi camionnettes et "poids-lourd" (i.e., métro, bus, engins de transport routier tels que camions, tracteurs, remorques, véhicules hors-la-route tels qu'engins agricoles ou de génie civil).

L'invention concerne les pneumatiques ci-dessus tant à l'état cru (i.e., avant cuisson) qu'à l'état cuit (i.e., après réticulation ou vulcanisation).

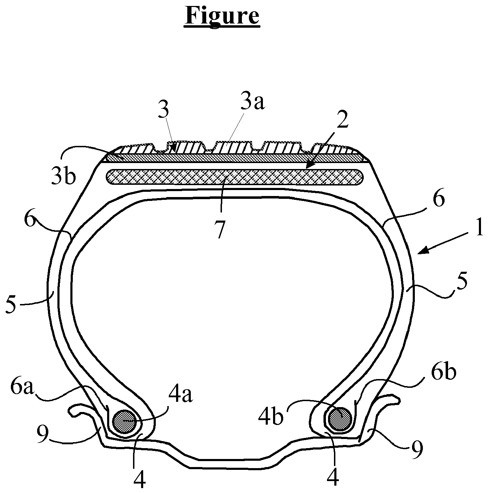

L'invention ainsi que ses avantages seront aisément compris à la lumière de la description et des exemples de réalisation qui suivent, ainsi que de la figure unique relative à ces exemples qui schématise, en coupe radiale, un exemple de pneumatique radial conforme à l'invention.

### I - Définitions

Dans la présente demande, on entend de manière connue par :
- "bourrelet", la portion du pneumatique adjacente radialement intérieurement au flanc et dont la base est destinée à être montée sur un siège de jante d'une roue de véhicule ;
- "couche élastomère", on entend tout élément tridimensionnel en composition de caoutchouc, de forme et d'épaisseur quelconques, notamment feuille, bande, ou autre élément de section droite quelconque, par exemple rectangulaire ou triangulaire ;
- "flanc", la portion du pneumatique, le plus souvent de faible rigidité de flexion, située entre le sommet et le bourrelet ;
- "pce" signifie parties en poids pour cent parties d'élastomère (du total des élastomères si plusieurs élastomères sont présents, donc y compris l'élastomère TPS) ;
- "radiale", une direction passant par l'axe de rotation du pneumatique et normale à celui-ci ; cette direction peut être "radialement intérieure (ou interne)" ou "radialement extérieure (ou externe)" selon qu'elle se dirige vers l'axe de rotation du pneumatique ou vers l'extérieur du pneumatique.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II - MESURES ET TESTS UTILISES

Les compositions de caoutchouc utilisées dans les pneumatiques selon l'invention sont caractérisées, avant et après cuisson, comme indiqué ci-après.

### II.1 - Dureté shore A

La dureté shore A des compositions après cuisson est appréciée conformément à la norme ASTM D 2240-86.

### II.2 - Propriétés dynamiques

Les propriétés dynamiques G*(10%) et tan(δ)ₘₐₓ à 40°C sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz. On effectue un balayage en amplitude de déformation de 0,1 à 50% (cycle aller), puis de 50% à 1% (cycle retour). Les résultats exploités sont le module complexe de cisaillement dynamique G* et le facteur de perte tan(δ). Pour le cycle retour, on indique la valeur maximale de tan(δ) observée, notée tan(δ)ₘₐₓ, ainsi que le module complexe de cisaillement dynamique G*(10%) à 10% de déformation.

On rappelle que, de manière bien connue de l'homme du métier, la valeur de tan(δ)ₘₐₓ à 40°C est représentative de l'hystérèse du matériau donc de la résistance au roulement : plus tan(δ)ₘₐₓ à 40°C est faible, plus la résistance au roulement est réduite.

La valeur de G* (10%) est quant à elle représentative de la rigidité : plus G* est élevée plus la rigidité est importante.

### III - DESCRIPTION DETAILLEE DE L'INVENTION

Le pneumatique de l'invention comprend une sous-couche comportant une composition de caoutchouc comprenant au moins un élastomère diénique, une charge renforçante et un copolymère thermoplastique styrénique (« TPS ») et autres additifs éventuels qui vont être décrits en détail ci-après.

### III.1 - Elastomère diénique

La sous-couche du sommet du pneumatique selon l'invention comprend une composition de caoutchouc comportant au moins un élastomère diénique.

Par élastomère (ou « caoutchouc », les deux étant considérés comme synonymes) "diénique", on rappelle que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a)- tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

On préfère utiliser au moins un élastomère diénique du type fortement insaturé, en particulier un élastomère diénique choisi dans le groupe constitué par les polybutadiènes (BR) (notamment ceux ayant un taux de liaisons cis-1,4 supérieur à 90%), les polyisoprènes de synthèse (IR), le caoutchouc naturel (NR), les copolymères de butadiène, les copolymères d'isoprène (autres que IIR) et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 ou WO 2008/141702), des groupes alkoxysilanes (tels que décrits par exemple dans FR 2 765 882 ou US 5 977 238), des groupes carboxyliques (tels que décrits par exemple dans WO 01/92402, US 6 815 473, WO 2004/096865 ou US 2006/0089445) ou encore des groupes polyéthers (tels que décrits par exemple dans EP 1 127 909, US 6 503 973, WO 2009/000750, ou WO 2009/000752). A titre d'autres exemples de tels élastomères fonctionnalisés, on peut citer également des élastomères (tels que SBR, BR, NR ou IR) du type époxydés.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -80°C à -40°C, les copolymères isoprène-styrène et notamment ceux ayant une teneur en styrène comprise entre 5% et 50% en poids et une Tg comprise entre -5°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -5°C et -70°C.

Selon un mode de réalisation particulier et préférentiel de l'invention, la sous-couche élastomère comporte, à titre d'élastomère diénique, au moins 40 pce, plus préférentiellement au moins 50 pce de caoutchouc naturel ou polyisoprène de synthèse, ce dernier pouvant être combiné ou non à un second élastomère diénique, en particulier un copolymère SBR (SBR solution ou émulsion) ou un polybutadiène ayant un taux de liaisons cis-1,4 qui est de préférence supérieur à 90%.

Selon un autre mode particulier de réalisation, la sous-couche comporte du caoutchouc naturel ou un polyisoprène de synthèse, à un taux compris entre 10 et 90 pce, plus préférentiellement entre 20 et 80 pce.

Selon un autre mode de réalisation plus particulier et préférentiel, la sous-couche comporte, à titre d'élastomère diénique, de 40 à 80 pce (plus préférentiellement de 50 à 80 pce) de caoutchouc naturel ou polyisoprène de synthèse, avec 20 à 60 pce (de préférence 20 à 50 pce) d'un copolymère SBR ou d'un polybutadiène ayant un taux de liaisons cis-1,4 qui est de préférence supérieur à 90%, plus préférentiellement encore supérieur à 95%.

Selon un autre mode de réalisation particulier et préférentiel de l'invention, la sous-couche comporte, à titre d'élastomère diénique, au moins 40 pce, plus préférentiellement au moins 50 pce, d'un polybutadiène (BR) ayant un taux de liaisons cis-1,4 supérieur à 90%, plus préférentiellement encore supérieur à 95%. Plus préférentiellement, ledit polybutadiène est alors utilisé en coupage avec du caoutchouc naturel ou un polyisoprène de synthèse.

Selon un autre mode de réalisation, la sous-couche comporte un polybutadiène (BR), dont le taux est préférentiellement compris entre 20 et 55 pce.

Selon un autre mode de réalisation particulier et préférentiel, l'élastomère diénique utilisé est un coupage (mélange) ternaire de NR (ou IR), BR et SBR. De préférence, dans le cas de tels coupages, la composition comporte de 40 à 80 pce de NR (ou IR) et de 20 à 60 pce de BR et SBR.

Aux élastomères diéniques précédemment décrits pourraient être associés, en quantité minoritaire, des élastomères synthétiques autre que diéniques, voire des polymères autres que des élastomères, par exemple des polymères thermoplastiques.

### III.2 - Elastomère thermoplastique styrénique

Le pneumatique selon l'invention comporte une sous-couche comprenant une composition de caoutchouc qui a pour autre caractéristique essentielle de comporter au moins un copolymère thermoplastique styrénique (en abrégé "TPS").

Les élastomères thermoplastiques styréniques (en abrégé "TPS") sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

Dans la présente demande, on entend par définition et de manière connue :
- par élastomère TPS saturé, un élastomère TPS qui ne comporte aucune insaturation éthylénique (i.e., aucune double liaison carbone-carbone) ;
- par élastomère TPS insaturé, un élastomère TPS qui est pourvu d'insaturations éthyléniques, c'est-à-dire qui comporte des doubles liaisons carbone-carbone (conjuguées ou non).

Selon un mode de réalisation préférentiel, le copolymère TPS est un copolymère insaturé qui comporte des blocs styrène et des blocs diène, ces blocs diène étant en particulier des blocs isoprène ou butadiène. Plus préférentiellement, cet élastomère TPS, insaturé, est choisi dans le groupe constitué par les copolymères blocs styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Plus préférentiellement, ledit élastomère thermoplastique est choisi dans le groupe constitué par les copolymères SBS, les copolymères SIS, les copolymères SI et les mélanges de ces copolymères.

Selon un autre mode de réalisation préférentiel, l'élastomère TPS est un copolymère saturé comportant des blocs styrène et des blocs alkylènes. Les blocs alkylènes sont préférentiellement de l'éthylène, du propylène ou du butylène. De préférence, l'élastomère TPS saturé est choisi dans le groupe constitué par les copolymères blocs styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, ledit élastomère est choisi dans le groupe constitué par les copolymères SEBS, les copolymères SEPS, les copolymères de SEEPS et les mélanges de ces copolymères.

Selon un mode de réalisation préférentiel de l'invention, le taux de styrène du copolymère TPS est compris entre 5 et 50%. En dessous du minimum indiqué, le caractère thermoplastique de l'élastomère risque de diminuer de manière sensible tandis qu'au-dessus du maximum préconisé, l'élasticité de la composition peut être affectée. Pour ces raisons, le taux de styrène est plus préférentiellement compris entre 10 et 40%, en particulier entre 15 et 35%.

La masse moléculaire moyenne en nombre (notée Mn) de l'élastomère TPS est préférentiellement comprise entre 50 000 et 500 000 g/mol, plus préférentiellement comprise entre 75 000 et 450 000, notamment pour une utilisation de la composition dans une sous couche de pneumatique.

La masse moléculaire Mn est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Selon un mode préférentiel de réalisation de l'invention, la composition de caoutchouc de la sous-couche du pneumatique de l'invention comporte préférentiellement de 10 à 60 pce de copolymère TPS, et plus préférentiellement de 15 à 40 pce. En dessous de 10 pce, l'effet technique risque d'être insuffisant ; au-delà de 60 pce, l'hystérèse risque d'être pénalisée.

A titre d'exemples d'élastomères TPS saturés commercialement disponibles, on peut citer les élastomères de type SEPS, SEEPS, ou SEBS commercialisés par la société Kraton sous la dénomination "Kraton G" (e.g. produits G1650, G1651, G1654, G1730) ou la société Kuraray sous la dénomination "Septon" (e.g. « Septon 2007 », « Septon 4033 », « Septon 8004 »).

A titre d'exemples d'élastomères TPS insaturés commercialement disponibles, on peut citer les élastomères commercialisés par la société Dexco Polymers sous la dénomination de « Vector » (e.g. « Vector 4114 », « Vector 8508 »).

### III.3 - Charge renforçante

On peut utiliser tout type de charge renforçante connue pour ses capacités à renforcer une composition de caoutchouc utilisable pour la fabrication d'un couche élastomère interne de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("*non-black filler*") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices «Zeopol» 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(I) Z - A - Sₓ - A - Z , dans laquelle:

- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 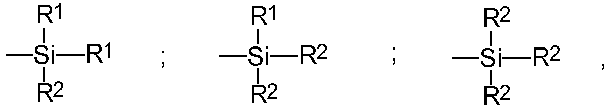 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc des pneumatiques conformes à l'invention, la teneur en agent de couplage est préférentiellement comprise entre 4 et 12 pce, plus préférentiellement entre 4 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### III.4 - Additifs divers

Les compositions de caoutchouc des sous-couches précédemment décrites comportent également tout ou partie des additifs usuels habituellement utilisés dans les compositions d'élastomères, comme par exemple des pigments, des agents de protection tels que cires anti-ozone, anti-ozonants chimiques, anti-oxydants, d'autres agents plastifiants que ceux précités, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Selon un mode de réalisation particulier, la composition selon l'invention comporte en outre un agent plastifiant. Cet agent plastifiant peut être une résine hydrocarbonée solide, un plastifiant liquide, ou un mélange des deux.

Le taux d'agent plastifiant est typiquement compris entre 0 et 50 pce, par exemple entre 10 et 40 pce.

Selon un premier mode de réalisation préférentiel de l'invention, cet agent plastifiant est une résine hydrocarbonée dont la Tg est supérieure à 0°C, de préférence supérieure à + 20°C.

De manière connue de l'homme du métier, la dénomination "résine " est réservée dans la présente demande, par définition, à un composé thermoplastique qui est un solide à température ambiante (23°C), par opposition à un composé plastifiant liquide tel qu'une huile.

De préférence, la résine plastifiante hydrocarbonée thermoplastique présente au moins une quelconque des caractéristiques suivantes :
- une Tg supérieure à 20°C, plus préférentiellement supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le monomère vinylaromatique est du styrène ou un monomère vinylaromatique issu d'une coupe C₉ (ou plus généralement d'une coupe C₈ à C₁₀). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères de terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines, utilisables seules ou en combinaison avec un plastifiant liquide, par exemple une huile MES ou TDAE.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C₅/ vinylaromatique, notamment coupe C₅/ styrène ou coupe C₅/ coupe C₉ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "ECR 373" ;
- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Selon un autre mode de réalisation préférentiel de l'invention, le plastifiant est un plastifiant liquide à 20 °C, dit à « basse Tg », c'est-à-dire qui par définition présente une Tg inférieure à - 20 °C, de préférence inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. Conviennent particulièrement les plastifiants liquides choisis dans le groupe constitué par les huiles naphténiques, notamment hydrogénées, les huiles paraffiniques, les huiles MES, les huiles TDAE, les plastifiants esters, éthers, les plastifiants phosphates et sulfonates et les mélanges de ces composés. Parmi les plastifiants esters sont notamment utilisables les composés choisis dans le groupe constitué par les phosphates, les trimellitates, les pyromellitates, les phtalates, les 1,2-cyclohexane dicarboxylates, les adipates, les azélaates, les sébacates, les triesters de glycérol et les mélanges de ces composés.

### III.5 - Préparation des compositions de caoutchouc

Les compositions utilisées dans la sous-couche des pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer dans un mélangeur, à au moins un élastomère diénique, au cours d'une première étape (dite "non-productive"), un copolymère thermoplastique styrénique, une charge renforçante, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires l'élastomère diénique, le copolymère TPS, la charge renforçante), puis dans un deuxième temps, par exemple après une à deux minutes de malaxage, les autres additifs, éventuels agents de recouvrement de la charge ou de mise en œuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une sous-couche.

L'invention concerne les pneumatiques précédemment décrits tant à l'état cru (c'est à dire, avant cuisson) qu'à l'état cuit (c'est à dire, après réticulation ou vulcanisation).

### III.6 - Pneumatique de l'invention

La composition de caoutchouc précédemment décrite est donc utilisée, dans le pneumatique de l'invention, comme sous-couche disposée circonférentiellement à l'intérieur du sommet du pneumatique, entre d'une part la partie plus radialement externe de sa bande de roulement, i.e., la portion destinée à entrer au contact de la route lors du roulage, et d'autre part la ceinture renforçant ledit sommet.

Il faut donc comprendre que la sous-couche est disposée :
- soit sous la bande de roulement (c'est-à-dire radialement intérieurement par rapport à cette bande de roulement), entre la bande de roulement et la ceinture ;
- soit dans la bande de roulement elle-même, mais dans ce cas sous la portion (c'est-à-dire radialement intérieurement par rapport à cette portion) de bande de roulement qui est destinée à entrer au contact de la route lors du roulage du pneumatique à l'état neuf, étant entendu que cette sous-couche peut éventuellement elle aussi entrer au contact de la route après usure de la partie externe de la bande de roulement, dans un tel cas, il faut comprendre que les sculptures de la bande de roulement pénètrent alors jusque dans la sous-couche.

La figure unique annexée représente en coupe radiale, de manière très schématique (notamment sans respect d'une échelle spécifique), un exemple préférentiel de bandage pneumatique pour véhicule automobile à armature de carcasse radiale, conforme à l'invention.

Sur cette figure, le bandage pneumatique (1) schématisé comporte un sommet 2 surmonté d'une bande de roulement 3 (pour simplifier, comportant une sculpture très simple) dont la partie radialement externe (3a) est destinée à entrer au contact de la route, deux bourrelets inextensibles (4) dans lesquels est ancrée une armature de carcasse (6). Le sommet 2, réuni auxdits bourrelets (4) par deux flancs (5), est de manière connue en soi renforcé par une armature de sommet ou "ceinture" (7) au moins en partie métallique et radialement externe par rapport à l'armature de carcasse (6), constituée par exemple d'au moins deux nappes croisées superposées renforcées par des câbles métalliques.

L'armature de carcasse (6) est ici ancrée dans chaque bourrelet (4) par enroulement autour de deux tringles (4a, 4b), le retournement (6a, 6b) de cette armature (6) étant par exemple disposé vers l'extérieur du pneumatique (1) qui est ici représenté monté sur sa jante (9). Bien entendu, ce pneumatique (1) comporte en outre de manière connue une couche de gomme ou élastomère intérieure (communément appelée " gomme intérieure " ou " inner liner ") qui définit la face radialement interne du pneumatique et qui est destinée à protéger la nappe de carcasse de la diffusion d'air provenant de l'espace intérieur au pneumatique.

Le pneumatique selon l'invention a pour caractéristique de comporter une couche élastomère radialement interne (3b) dite « sous-couche » de formulation différente de la formulation de la couche élastomère radialement externe (3a) de la bande de roulement, cette sous-couche étant disposée entre la couche radialement externe (3a) et la ceinture (7).

### IV - EXEMPLES DE REALISATION DE L'INVENTION

### IV.1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique, le copolymère thermoplastique styrénique, la charge renforçante (silice et noir de carbone), ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'une sous-couche de pneumatique.

### IV.2 - Essais avec des TPS saturés

Ces essais démontrent, comparativement à une composition témoin, l'amélioration de la rigidité des compositions des sous-couches (3b) des pneumatiques selon l'invention, combinée à une diminution d'hystérèse, donc de résistance au roulement.

Pour cela, quatre compositions de caoutchouc ont été préparées comme indiqué précédemment, trois conformément à l'invention (notée ci-après C.2 à C.4) et une non-conforme (composition témoin, notée ci-après C.1).

Leurs formulations (en pce ou parties en poids pour cent parties d'élastomère total, donc y compris l'élastomère TPS) et leurs propriétés mécaniques ont été résumées dans les tableaux 1, 2 annexés.

La composition C.1 est une composition référence pour l'homme du métier, à base de SBR, BR, et NR, conventionnellement utilisée pour fabriquer une sous-couche de pneumatique pour véhicules tourisme.

Les formulations des compositions C.2, C.3, C.4 des sous-couches des pneumatiques selon l'invention sont identiques à celle de la composition C.1 excepté que le SBR a été remplacé par un copolymère TPS saturé, respectivement du SEPS, SEEPS, SEBS. Les compositions C.1 à C.4 comprennent à titre d'agent plastifiant, un mélange à base d'une huile MES et de polylimonène.

On note tout d'abord que les compositions C.2 à C.4 des sous-couches des pneumatiques selon l'invention présentent des valeurs de dureté shore A, et de module complexe de cisaillement dynamique G* (10%) à 40°C, toutes augmentées par rapport à la composition témoin C.1, témoignant d'une augmentation de rigidité des compositions, à l'origine d'une rigidification du sommet propice à une amélioration du comportement routier.

En outre, les compositions des sous-couches des pneumatiques selon l'invention présentent une valeur de tan(δ)ₘₐₓ à 40°C qui est notablement inférieure à celle de la composition témoin C.1, synonyme d'une diminution de l'hystérèse donc de résistance au roulement des sous-couches des pneumatiques selon l'invention.

En conclusion, les résultats de ces essais démontrent que l'emploi d'un copolymère TPS saturé, permet d'améliorer de manière notable la rigidité des compositions des sous-couches (3b) des pneumatiques selon l'invention et donc d'améliorer leur comportement routier, tout en diminuant l'hystérèse donc la résistance au roulement des pneumatiques par rapport à un pneumatique conventionnel.

### IV.3 - Essais avec des TPS insaturés

Ces essais démontrent l'amélioration de la rigidité des compositions des sous-couches des pneumatiques selon l'invention, tout en conservant le même niveau d'hystérèse donc de résistance au roulement, comparativement à une composition témoin.

Pour cela, deux compositions de caoutchouc ont été préparées comme indiqué précédemment, une conformément à l'invention (notée ci-après C.6) et une non-conforme (composition témoin, notée ci-après C.5).

Leurs formulations (en pce ou parties en poids pour cent parties d'élastomère total, donc y compris l'élastomère TPS) et leurs propriétés mécaniques ont été résumées dans les tableaux 3, 4 annexés.

La composition C.5 est une composition référence pour l'homme du métier, à base de SBR, BR, et NR, conventionnellement utilisée pour fabriquer une sous-couche de pneumatique pour véhicules tourisme.

La formulation de la composition C.6 de la sous-couche du pneumatique selon l'invention est identique à celle de la composition C.5, excepté le SBR qui a été remplacé par un copolymère TPS insaturé (SBS). Les compositions C.5 et C.6 comprennent à titre d'agent plastifiant, un mélange d'huile MES et de polylimonène.

On note tout d'abord que la composition C.6 de la sous-couche du pneumatique selon l'invention présentent des valeurs de dureté shore A, et de module complexe de cisaillement dynamique G* (10%) à 40°C, augmentées par rapport à la composition témoin C.5, confirmant une augmentation de rigidité des compositions, à l'origine d'une rigidification du sommet propice à une amélioration du comportement routier.

La composition de la sous-couche du pneumatique selon l'invention présente une valeur de tan(δ)ₘₐₓ à 40°C qui est identique à celle de la composition témoin C.5, synonyme d'une résistance au roulement équivalente.

En conclusion, les résultats de ces essais démontrent que l'emploi d'un copolymère TPS insaturé dans les compositions des sous-couches des pneumatiques selon l'invention, permet d'améliorer de manière notable la rigidité des compositions des sous-couches (3b) donc le comportement routier des pneumatiques, tout en conservant le même niveau d'hystérèse que la composition témoin, c'est-à-dire le même niveau de résistance au roulement par rapport à un pneumatique conventionnel.

**Tableau 1**

| Composition n° | C.1 | C.2 | C.3 | C.4 |
|---|---|---|---|---|
| BR (1) | 45 | 45 | 45 | 45 |
| NR (2) | 35 | 35 | 35 | 35 |
| SBR (3) | 20 | - | - | - |
| Elastomère TPS (4) | - | 20 | - | - |
| Elastomère TPS (5) | - | - | 20 | - |
| Elastomère TPS (6) | - | - | - | 20 |
| Charge (7) | 85 | 85 | 85 | 85 |
| Plastifiant (8) | 36 | 36 | 36 | 36 |
| Acide stéarique (9) | 2 | 2 | 2 | 2 |
| ZnO (10) | 2 | 2 | 2 | 2 |
| Soufre | 1.45 | 1.45 | 1.45 | 1.45 |
| CBS (11) | 1.4 | 1.4 | 1.4 | 1.4 |
| Cire anti-ozone | 1.5 | 1.5 | 1.5 | 1.5 |

| | | | | |
|---|---|---|---|---|
| (1) BR avec 0.5% de 1-2 ; 1.2% de trans ; 98.3% de cis 1-4 (Tg = - 106°C) ; (2) NR caoutchouc naturel peptisé ; (3) SBR solution (taux exprimé en SBR sec) ; avec 40% de styrène, dans la partie butadiénique 24 % de motifs 1-2 et 48% de motifs 1-4 trans (Tg = - 28°C) ; (4) TPS SEPS « Septon 2007 » de la société Kuraray ; (5) TPS SEEPS « Septon 4033 » de la société Kuraray ; (6) TPS SEBS « Septon 8004 » de la société Kuraray ; (7) Noir de carbone : N234 (grade ASTM) ; (8) Mélange d'huile MES (« Catenex SNR » de Shell) et de résine polylimonène (« Dercolyte L120 de la société DRT) ; (9) stéarine ("Pristerene" de la société Uniquema) ; (10) oxyde de zinc (grade industriel - société Umicore) ; (11) N-cyclohexyl-2-benzothiazyl-sulfénamide (Santocure CBS de la société Flexsys) ; | | | | |

**Tableau 2**

| Composition n° | C.1 | C.2 | C.3 | C.4 |
|---|---|---|---|---|
| Shore A | 65 | 70 | 71 | 70 |
| G* (10%) à 40°C | 2.2 | 2.9 | 3.1 | 2.8 |
| Tan(δ)ₘₐₓ à 40°C | 0.370 | 0.310 | 0.310 | 0.320 |

**Tableau 3**

| Composition n° | C.5 | C.6 |
|---|---|---|
| BR (1) | 45 | 45 |
| NR (2) | 35 | 35 |
| SBR (3) | 20 | - |
| Elastomère TPS (4) | - | 20 |
| Noir de carbone (5) | 85 | 85 |
| Plastifiant (6) | 36 | 36 |
| Cire anti-ozone | 1.5 | 1.5 |
| Agent anti-oxydant (7) | 2 | 2 |
| ZnO (8) | 2 | 2 |
| Acide stéarique(9) | 2 | 2 |
| Soufre | 1.45 | 1.45 |
| CBS (10) | 1.4 | 1.4 |

| | | |
|---|---|---|
| (1) BR avec 0.5% de 1-2 ; 1.2% de trans ; 98.3% de cis 1-4 (Tg = - 106°C) ; (2) NR caoutchouc naturel peptisé ; (3) SBR solution (taux exprimé en SBR sec) ; avec 40% de styrène, dans la partie butadiènique 24 % de motifs 1-2 et 48% de motifs 1-4 trans (Tg = - 28°C) ; (4) TPS insaturé SBS (« Vector 8508 » de la société Dexco Polymers) (5) Noir de carbone N234 ; (6) Mélange d'huile MES (« Catenex SNR » de Shell) et de résine polylimonène (« Dercolyte L120 de la société DRT) ; (7) N-1,3-diméthylbutyl-N-phénylparaphénylènediamine (« Santoflex » 6-PPD de la société Flexsys) ; (8) oxyde de zinc (grade industriel - société Umicore) ; (9) stéarine ("Pristerene" de la société Uniquema); (10) N-cyclohexyl-2-benzothiazyl-sulfénamide (Santocure CBS de la société Flexsys). | | |

**Tableau 4**

| Composition n° | C.5 | C.6 |
|---|---|---|
| Shore A | 63 | 67 |
| G* (10%) à 40°C | 2.5 | 2.8 |
| Tan(δ)ₘₐₓ à 40°C | 0.34 | 0.34 |

## Revendications

1. Pneumatique radial (1) pour véhicule automobile, comportant :
- un sommet (2) surmonté d'une bande de roulement (3) pourvue d'au moins une couche élastomère (3a) radialement externe destinée à entrer au contact de la route lors du roulage du pneumatique ;
- deux bourrelets inextensibles (4), deux flancs (5) reliant les bourrelets (4) à la bande de roulement (3), une armature de carcasse (6) passant dans les deux flancs (5) et ancrée dans les bourrelets (4) ;
- le sommet (2) étant renforcé par une armature de sommet ou ceinture (7) disposée circonférentiellement entre l'armature de carcasse (6) et la bande de roulement (3) ;
- une couche élastomère radialement interne (3b) dite « sous-couche » de formulation différente de la formulation de la couche élastomère radialement externe (3a), cette sous-couche étant disposée entre la couche radialement externe (3a) et le ceinture (7),
**caractérisé en ce que** la dite sous-couche élastomère comprend une composition de caoutchouc comportant au moins un élastomère diénique dont un polybutadiène (BR) à un taux compris entre 10 et 60 pce, une charge renforçante, un copolymère thermoplastique styrénique (dit « élastomère TPS »).

2. Pneumatique selon la revendication 1, dans lequel l'élastomère diénique est choisi dans le groupe constitué par les polybutadiènes (BR), les polyisoprènes (IR) de synthèse, le caoutchouc naturel (NR), les copolymères de butadiène, les copolymères d'isoprène et les mélanges de ces élastomères.

3. Pneumatique selon les revendications 1 ou 2, dans lequel le taux de BR est compris entre 20 et 55 pce.

4. Pneumatique selon l'une quelconque des revendications de 1 à 3, dans lequel la composition de caoutchouc comporte du caoutchouc naturel ou un polyisoprène de synthèse, à un taux compris entre 10 et 90 pce.

5. Pneumatique selon la revendication 4, dans lequel le taux de caoutchouc naturel ou de polyisoprène de synthèse est compris entre 20 et 80 pce.

6. Pneumatique selon l'une quelconque des revendications de 1 à 5, dans lequel le taux de copolymère TPS est compris dans un domaine de 10 à 60 pce.

7. Pneumatique selon la revendication 6, dans lequel le taux de copolymère TPS est compris dans un domaine de 15 à 40 pce.

8. Pneumatique selon l'une quelconque des revendications 1 à 7, dans lequel le copolymère TPS est un copolymère saturé comportant des blocs styrène et des blocs alkylène.

9. Pneumatique selon la revendication 8, dans lequel les blocs alkylène sont des blocs éthylène ou propylène ou butylène.

10. Pneumatique selon la revendication 9, dans lequel le copolymère TPS saturé est choisi dans le groupe constitué par les copolymères blocs styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

11. Pneumatique selon la revendication 10, dans lequel le copolymère TPS saturé est choisi dans le groupe constitué par les copolymères blocs styrène/éthylène/ butylène (SEBS), styrène/éthylène/éthylène/propylène/styrène (SEEPS), styrène/éthylène/propylène/styrène (SEPS) et les mélanges de ces copolymères.

12. Pneumatique selon l'une quelconque des revendications 1 à 7, dans lequel le copolymère TPS est un copolymère insaturé comportant des blocs styrène et des blocs diène.

13. Pneumatique selon la revendication 12, dans lequel les blocs diène sont des blocs isoprène ou butadiène.

14. Pneumatique selon la revendication 13, dans lequel le copolymère TPS insaturé est choisi dans le groupe constitué par les copolymères blocs styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

15. Pneumatique selon la revendication 14, dans lequel le copolymère TPS insaturé est choisi dans le groupe constitué par les copolymères blocs styrène/ isoprène (SI), styrène/ butadiène/ styrène (SBS), styrène/ isoprène/ styrène (SIS) et les mélanges de ces copolymères.

16. Pneumatique selon l'une quelconque des revendications 1 à 15, dans lequel la composition de caoutchouc comporte en outre un agent plastifiant.

17. Pneumatique selon la revendication 16, dans lequel le taux d'agent plastifiant est compris entre 0 et 50 pce.

18. Pneumatique selon l'une quelconque des revendications 1 à 17, dans lequel la composition de caoutchouc comporte une charge renforçante comportant du noir de carbone, de la silice, ou un mélange de noir de carbone et de silice.

## Patentansprüche

1. Radialreifen (1) für Kraftfahrzeug, umfassend:
- einen Scheitel (2), über dem eine Lauffläche (3), die mit mindestens einer radial äußeren Elastomerschicht (3a), die dazu bestimmt ist, beim Rollen des Reifens mit der Straße in Kontakt zu kommen, versehen ist;
- zwei nicht dehnbare Wülste (4), zwei Flanken (5), die die Wülste (4) mit der Lauffläche (3) verbinden, eine Karkassenbewehrung (6), die in die beiden Flanken (5) übergeht und in den Wülsten (4) verankert ist;
- wobei der Scheitel (2) durch eine Scheitelbewehrung oder einen Gürtel (7), die bzw. der umfänglich zwischen der Karkassenbewehrung (6) und der Lauffläche (3) angeordnet ist, verstärkt ist;
- eine als "Unterschicht" bezeichnete radial innere Elastomerschicht (3b) mit einer Formulierung, die von der Formulierung der radial äußeren Elastomerschicht (3a) verschieden ist, wobei diese Unterschicht zwischen der radial äußeren Schicht (3a) und dem Gürtel (7) angeordnet ist,
**dadurch gekennzeichnet, dass** die Elastomer-Unterschicht eine Kautschukzusammensetzung umfasst, die mindestens ein Dienelastomer, darunter ein Polybutadien (BR) in einem Gehalt zwischen 10 und 60 phe, einen verstärkenden Füllstoff und ein thermoplastisches Styrol-Copolymer (das als "TPS-Elastomer" bezeichnet wird) umfasst.

2. Reifen nach Anspruch 1, wobei das Dienelastomer aus der Gruppe bestehend aus Polybutadienen (BR), synthetischen Polyisoprenen (IR), Naturkautschuk (NR), Butadien-Copolymeren, Isopren-Copolymeren und Mischungen dieser Elastomere ausgewählt ist.

3. Reifen nach Anspruch 1 oder 2, wobei der BR-Gehalt zwischen 20 und 55 phe liegt.

4. Reifen nach einem der Ansprüche 1 bis 3, wobei die Kautschukzusammensetzung Naturkautschuk oder ein synthetisches Polyisopren in einem Gehalt zwischen 10 und 90 phe umfasst.

5. Reifen nach Anspruch 4, wobei der Gehalt an Naturkautschuk oder synthetischem Polyisopren zwischen 20 und 80 phe liegt.

6. Reifen nach einem der Ansprüche 1 bis 5, wobei der Gehalt an TPS-Copolymer im Bereich von 10 bis 60 phe liegt.

7. Reifen nach Anspruch 6, wobei der Gehalt an TPS-Copolymer im Bereich von 15 bis 40 phe liegt.

8. Reifen nach einem der Ansprüche 1 bis 7, wobei es sich bei dem TPS-Copolymer um ein gesättigtes Copolymer mit Styrolblöcken und Alkylenblöcken handelt.

9. Reifen nach Anspruch 8, wobei es sich bei den Alkylenblöcken um Ethylen- oder Propylen- oder Butylenblöcke handelt.

10. Reifen nach Anspruch 9, wobei das gesättigte TPS-Copolymer aus der Gruppe bestehend aus Styrol-Ethylen-Butylen-Blockcopolymeren (SEB), Styrol-Ethylen-Propylen-Blockcopolymeren (SEP), Styrol-Ethylen-Ethylen-Propylen-Blockcopolymeren (SEEP), Styrol-Ethylen-Butylen-Styrol-Blockcopolymeren (SEBS), Styrol-Ethylen-Propylen-Styrol-Blockcopolymeren (SEPS), Styrol-Ethylen-Ethylen-Propylen-Styrol-Blockcopolymeren (SEEPS) und Mischungen dieser Copolymere ausgewählt ist.

11. Reifen nach Anspruch 10, wobei das gesättigte TPS-Copolymer aus der Gruppe bestehend aus Styrol-Ethylen-Butylen-Blockcopolymeren (SEBS), Styrol-Ethylen-Ethylen-Propylen-Styrol-Blockcopolymeren (SEEPS), Styrol-Ethylen-Propylen-Styrol-Blockcopolymeren (SEPS) und Mischungen dieser Copolymere ausgewählt ist.

12. Reifen nach einem der Ansprüche 1 bis 7, wobei es sich bei dem TPS-Copolymer um ein ungesättigtes Copolymer mit Styrolblöcken und Dienblöcken handelt.

13. Reifen nach Anspruch 12, wobei es sich bei den Dienblöcken um Isopren- oder Butadienblöcke handelt.

14. Reifen nach Anspruch 13, wobei das ungesättigte TPS-Copolymer aus der Gruppe bestehend aus Styrol-Butadien-Blockcopolymeren (SB), Styrol-Isopren-Blockcopolymeren (SI), Styrol-Butadien-Isopren-Blockcopolymeren (SBI), Styrol-Butadien-Styrol-Blockcopolymeren (SBS), Styrol-Isopren-Styrol-Blockcopolymeren (SIS), Styrol-Butadien-Isopren-Styrol-Blockcopolymeren (SBIS) und Mischungen dieser Copolymere ausgewählt ist.

15. Reifen nach Anspruch 14, wobei das ungesättigte TPS-Copolymer aus der Gruppe bestehend aus Styrol-Isopren-Blockcopolymeren (ESI), Styrol-Butadien-Styrol-Blockcopolymeren (SBS), Styrol-Isopren-Styrol-Blockcopolymeren (SIS) und Mischungen dieser Copolymere ausgewählt ist.

16. Reifen nach einem der Ansprüche 1 bis 15, wobei die Kautschukzusammensetzung außerdem einen Weichmacher umfasst.

17. Reifen nach Anspruch 16, wobei der Weichmachergehalt zwischen 0 und 50 phe liegt.

18. Reifen nach einem der Ansprüche 1 bis 17, wobei die Kautschukzusammensetzung einen verstärkenden Füllstoff umfasst, der Ruß, Kieselsäure oder eine Mischung von Ruß und Kieselsäure umfasst.

## Claims

1. Radial tyre (1) for a motor vehicle, comprising:
- a crown (2) surmounted by a tread (3) provided with at least one radially outer elastomer layer (3a) intended to come into contact with the road when the tyre is rolling;
- two inextensible beads (4), two sidewalls (5) connecting the beads (4) to the tread (3), a carcass reinforcement (6) passing into the two sidewalls (5) and anchored in the beads (4);
- the crown (2) being reinforced by a crown reinforcement or belt (7) placed circumferentially between the carcass reinforcement (6) and the tread (3);
- a radially inner elastomer layer (3b) known as a "sublayer", having a formulation different from the formulation of the radially outer elastomer layer (3a), this sublayer being placed between the radially outer layer (3a) and the belt (7),
**characterized in that** said elastomer sublayer comprises a rubber composition comprising at least one diene elastomer including a polybutadiene (BR) in a content of between 10 and 60 phr, one reinforcing filler and one thermoplastic styrene copolymer (referred to as "TPS elastomer").

2. Tyre according to Claim 1, in which the diene elastomer is selected from the group consisting of polybutadienes (BRs), synthetic polyisoprenes (IRs), natural rubber (NR), butadiene copolymers, isoprene copolymers and mixtures of these elastomers.

3. Tyre according to Claim 1 or 2, in which the rubber composition comprises a polybutadiene (BR), in a content of between 20 and 55 phr.

4. Tyre according to any one of Claims 1 to 3, in which the rubber composition comprises natural rubber or a synthetic polyisoprene, in a content of between 10 and 90 phr.

5. Tyre according to Claim 4, in which the content of natural rubber or of synthetic polyisoprene is between 20 and 80 phr.

6. Tyre according to any one of Claims 1 to 5, in which the content of TPS copolymer is within a range of from 10 to 60 phr.

7. Tyre according to Claim 6, in which the content of TPS copolymer is within a range of from 15 to 40 phr.

8. Tyre according to any one of Claims 1 to 7, in which the TPS copolymer is a saturated copolymer comprising styrene blocks and alkylene blocks.

9. Tyre according to Claim 8, in which the alkylene blocks are ethylene or propylene or butylene blocks.

10. Tyre according to Claim 9, in which the saturated TPS copolymer is selected from the group consisting of styrene/ethylene/butylene (SEB), styrene/ethylene/propylene (SEP), styrene/ethylene/ethylene/propylene (SEEP), styrene/ethylene/butylene/styrene (SEBS), styrene/ethylene/propylene/styrene (SEPS) and styrene/ethylene/ethylene/propylene/styrene (SEEPS) block copolymers and mixtures of these copolymers.

11. Tyre according to Claim 10, in which the saturated TPS copolymer is selected from the group consisting of styrene/ethylene/butylene (SEBS), styrene/ethylene/ethylene/propylene/ styrene (SEEPS) and styrene/ethylene/propylene/styrene (SEPS) block copolymers and mixtures of these copolymers.

12. Tyre according to any one of Claims 1 to 7, in which the TPS copolymer is an unsaturated copolymer comprising styrene blocks and diene blocks.

13. Tyre according to Claim 12, in which the diene blocks are isoprene or butadiene blocks.

14. Tyre according to Claim 13, in which the unsaturated TPS copolymer is selected from the group consisting of styrene/butadiene (SB), styrene/isoprene (SI), styrene/butadiene/ isoprene (SBI), styrene/butadiene/styrene (SBS), styrene/isoprene/styrene (SIS) and styrene/ butadiene/isoprene/styrene (SBIS) block copolymers and mixtures of these copolymers.

15. Tyre according to Claim 14, in which the unsaturated TPS copolymer is selected from the group consisting of styrene/isoprene (SI), styrene/butadiene/styrene (SBS) and styrene/ isoprene/styrene (SIS) block copolymers and mixtures of these copolymers.

16. Tyre according to any one of Claims 1 to 15, in which the rubber composition additionally comprises a plasticizing agent.

17. Tyre according to Claim 16, in which the content of plasticizing agent is between 0 and 50 phr.

18. Tyre according to any one of Claims 1 to 17, in which the rubber composition comprises a reinforcing filler comprising carbon black, silica, or a mixture of carbon black and silica.
